# EUROPEAN PATENT SPECIFICATION

(11) **EP 3 142 295 B1**
(45) Date of publication and mention of the grant of the patent: **30.01.2019**
(21) Application number: 14892971.4
(22) Date of filing: 28.05.2014
(51) Int. Cl.: H04L 12/24

(54) **METHOD, APPARATUS AND SYSTEM FOR VIRTUALIZING NETWORK MANAGEMENT SYSTEM**
VERFAHREN, VORRICHTUNG UND SYSTEM ZUR VIRTUALISIERUNG EINES NETZWERKVERWALTUNGSSYSTEMS
PROCÉDÉ, APPAREIL ET SYSTÈME POUR VIRTUALISER UN SYSTÈME DE GESTION DE RÉSEAU

(43) Date of publication of application: 15.03.2017
(73) Proprietor: Huawei Technologies Co. Ltd., Shenzhen, Guangdong 518129 (CN)
(72) Inventor: ZHAO, Dong, Shenzhen Guangdong 518129 (CN)
(74) Representative: Gill Jennings & Every LLP
(86) International application number: PCT/CN2014/078637
(87) International publication number: WO 2015/180068

(56) References cited:
- CN-A- 102 412 978
- CN-A- 102 710 432
- US-A1- 2008 147 833
- Prof Janusz Filipiak ET AL: "EVOLUTION OF NETWORK AND SERVICE MANAGEMENT", NOMS 2014, 12 May 2014 (2014-05-12), XP055365607, Retrieved from the Internet: URL:http://im2013.ieee-im.org/noms2014/key note_noms2014_filipiak.pdf [retrieved on 2017-04-19]
- "Network Function Virtualization (NFV) Management and Orchestration;NFV-MAN001v050-clean", ETSI DRAFT; NFV-MAN001V050-CLEAN, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, no. V0.5.0, 23 May 2014 (2014-05-23), pages 1-195, XP014182233, [retrieved on 2014-05-23]
- ZTE CORPORATION: "IFA021 Use case for deployment of virtualized EM", ETSI DRAFT; NFVIFA(16)0001279R7, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG - NFV IFA - Interfaces and Architecture 14 December 2016 (2016-12-14), pages 1-3, XP014283592, Retrieved from the Internet: URL:docbox.etsi.org\ISG\NFV\IFA\05-CONTRIB UTIONS\2016\NFVIFA(16)0001279r7_IFA021_Use _case_for_deployment_of_virtualized_EM.doc x [retrieved on 2016-12-14]
- TANG, LIANG ET AL.: 'Virtualization Based Intelligent Pipe Cloud Network Management System' TELECOMMUNICATIONS SCIENCE 31 July 2012, XP008182917

## Description

### TECHNICAL FIELD

The present invention relates to the field of communications technologies, and in particular, to a method, an apparatus, and a system for implementing virtualized network management.

### BACKGROUND

In an existing communications network, when a network type needs to be changed or network performance needs to be enhanced, a network element and an element management system (Element Management System, EMS) need to be redeployed, for example, adding some network elements and/or some EMSs and updating an existing network element and/or an existing EMS. Communications networks of different types need different network element standards, and network elements of different standards use different network element interfaces and an EMS compatible with the interfaces of the network elements is required to manage the network elements.

Generally, a telecommunications equipment manufacturer produces an EMS to maintain a network element device produced by the telecommunications equipment manufacturer. Therefore, when deploying a communications network, an operator needs to purchase a matching (that is, interface compatibility) network element device and a matching EMS device that are produced by a same telecommunications equipment manufacturer, resulting in relatively poor flexibility and relatively high network deployment costs. To implement low-cost network deployment, people begin to study a communications network virtualization technology, so as to implement low-cost and fast network deployment.

Publication by Prof Janusz Filipiak et al titled, "EVOLUTION OF NETWORK AND SERVICE MANAGEMENT", NOMS 2014, 12 May 2014 (2014-05-12), relates to an exemplary implementation of network function virtualization.

Publication titled, "Network Function Virtualization (NFV) Management and Orchestration;NFVMAN001 v050-clean", ETSI DRAFT; NFV-MAN001 V050-CLEAN, EUROPEAN TELECOMMUNICATIONS STANDARDS INSTITUTE (ETSI), 650, ROUTE DES LUCIOLES ; F-06921 SOPHIAANTI POLIS ; FRANCE, val. ISG, no. V0.5.0, 23 May 2014 (2014-05-23), pages 1-195 provides technical specification and architecture of network function virtualization management and orchestration.

### SUMMARY

The present invention provides a method, an apparatus, and a system for implementing virtualized network management, so that a universal device may be used to implement virtualized network management, so as to meet a requirement of low-cost and fast network deployment.

In particular, the present disclosure provides a method according to claim 1, apparatus according to claims 6 and 11 and a system according to claim 13.

According to the method, the apparatus, and the system for implementing virtualized network management provided in the embodiments of the present invention, when a network management system needs to be deployed in a communications network, a network management function virtualization orchestrator or an operation support system first sets configuration information of virtualized network management, where the configuration information includes at least one or a combination of the following configuration information: configuration information of a network management function, configuration information of a topology relationship between a network management function and another virtualized network entity, configuration information of a network management related interface, configuration information of a life cycle, configuration information of a network management performance requirement, or configuration information of a deployment policy; and the network management function virtualization orchestrator or the operation support system then instructs a network management virtualization manager to complete, according to the configuration information, network management function virtualization. It can be learned that, according to the solutions of the present invention, a virtualization technology is used to deploy network management on a universal device, and therefore a network management device compatible with a network element does not need to be purchased, so as to save deployment costs; and because the virtualized network management is deployed on the universal device in the communications network, an on-site deployment operation of an operating person is no longer required, thereby reducing deployment time and meeting a requirement of low-cost and fast network deployment of the communications network.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of Embodiment 1 of a method for implementing virtualized network management according to an embodiment of the present invention;
FIG. 2 is a flowchart of Embodiment 2 of a method for implementing virtualized network management according to an embodiment of the present invention;
FIG. 3 is a flowchart of Embodiment 3 of a method for implementing virtualized network management according to an embodiment of the present invention;
FIG. 4 is a structural diagram of Embodiment 1 of an apparatus for implementing virtualized network management according to an embodiment of the present invention;
FIG. 5 is a structural diagram of Embodiment 3 of an apparatus for implementing virtualized network management according to an embodiment of the present invention;
FIG. 6 is a schematic diagram of a hardware constitution of an intelligent terminal according to an embodiment of the present invention;
FIG. 7 is a schematic diagram of a hardware constitution of another intelligent terminal according to an embodiment of the present invention; and
FIG. 8 is a schematic diagram of an architecture of a system for implementing virtualized network management according to an embodiment of the present invention.

### DESCRIPTION OF EMBODIMENTS

To enable a person skilled in the art to better understand the solutions in the embodiments of the present invention, the following describes the embodiments of the present invention in more detail with reference to accompanying drawings and implementation manners.

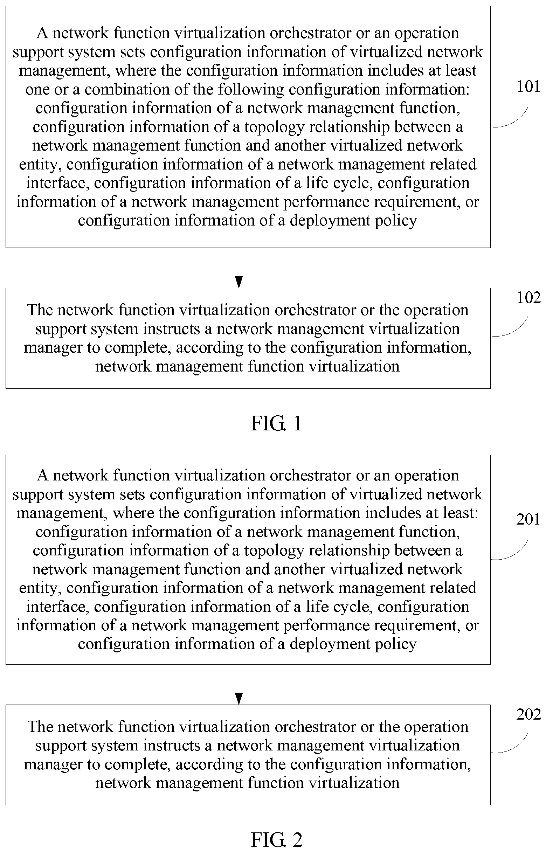

FIG. 1 shows a method for implementing virtualized network management according to an embodiment of the present invention. The method includes the following steps.

Step 101. A network function virtualization orchestrator or an operation support system sets configuration information of virtualized network management, where the configuration information includes at least one or a combination of the following configuration information:
configuration information of a network management function, configuration information of a topology relationship between a network management function and another virtualized network entity, configuration information of a network management related interface, configuration information of a life cycle, configuration information of a network management performance requirement, or configuration information of a deployment policy.

In a communications system, network management may be an element management system (Element Management System, EMS), or may be a network management system (Network Management System, NMS). Currently, common communications systems all include a network element, an element management system, and a network management system. The network management in the present invention may be an element management system in these systems. Some communications systems may include only a network element and a network management system, and the network management system in these communications systems is generally compatible with a function of an element management system. The network management in the present invention may be a network management system in these systems.

A network element (Network Element) is a generic term of various devices in a communications system. For example, devices such as a radio network controller (Radio Network Controller, RNC), a serving GPRS support node (Service GPRS Supporting Node, SGSN), a mobile switching center (Mobile Switching Center, MSC), a switch, and a multiplexer in a 3G Wideband Code Division Multiple Access (Wideband Code Division Multiple Access, WCDMA) network, and an evolved NodeB in a Long Term Evolution system may be all referred to as network elements.

The EMS refers to a system that manages one or more network elements of a particular type, and the EMS can perform an operation on, control, and maintain a network element. The EMS may locally maintain a network element, for example, the EMS is directly connected to the network element, and both the EMS and the network element are located inside a LAN (Local Area Network, local area network). The EMS may also be applied to a remote maintenance environment, for example, the EMS is connected to the network element by using a wide area network (Wide Area Network, WAN). Maintenance personnel of telecommunications equipment send a man-machine language (such as MNL) instruction to the network element by using the EMS. After receiving the instruction, the network element runs according to a requirement of the instruction and feeds back a running result to an operating person by using the EMS.

A relationship between the EMS and the network element is quite close, involving many internal interfaces. Therefore, each telecommunications equipment manufacturer provides an EMS to maintain a network element device generated by the telecommunications equipment manufacturer. When releasing a network element, the telecommunications equipment manufacturer launches a corresponding EMS at the same time. For network elements of different types, different versions, and different languages, different EMSs corresponding to the network elements are provided respectively. Therefore, when a system needs to upgrade a network element, a matching upgrade of an EMS corresponding to the network element further needs to be performed. Otherwise, a maintenance task cannot be completed. When devices of an entire network are upgraded, many problems such as multiple network elements, multiple versions, and multiple languages are involved, and therefore such inconvenience brought by deployment in a strict one-to-one correspondence between the network element and the EMS becomes more prominent.

When a communications system needs to update an existing network element or add some network elements, an EMS corresponding to the network element also needs to be updated or EMSs compatible with the newly added network elements need to be deployed. In this case, an operator needs to purchase some EMS devices compatible with the network element and deploy the EMS devices at an appropriate location. Because costs of an EMS device are relatively high and the EMS device needs to be installed by a professional technical person, costs of this deployment manner are relatively high and a rate of this deployment manner is relatively low.

Therefore, according to the method for implementing virtualized network management in this embodiment of the present invention, network management is set in a virtualization manner, which avoids an on-site deployment operation of an operating person, and can meet a requirement of a communications system for low-cost and high-rate network deployment.

When the communications system needs to virtualize network management, a function that the virtualized network management should implement first needs to be set, that is, a network management function. To enable interfaces between the virtualized network management and the network element managed by the virtualized network management to be compatible, a communication protocol between the virtualized network management and the network element managed by the virtualized network management further needs to be set. Because network elements in the communications system are diverse, which include the network element managed by the virtualized network management and a network element of another type (for example, a virtualized infrastructure manager (Virtualized Infrastructure Manager, VIM)). To ensure normal working of the virtualized network management in an entire communications system, a topology relationship between the virtualized network management and another network element (a network element except the network element managed by the network management) also needs to be set. Because there is information exchange between the virtualized network management and each network element in the system, an interface format between the network management and these network elements further needs to be set, so as to ensure normal communication between the network management and these network elements. The foregoing information is the configuration information, of virtualized network management, that needs to be first set when the virtualized network management is established. In an actual application, the setting operation may be performed by an operation support system, or may be performed by a network function virtualization orchestrator.

Step 102. The network function virtualization orchestrator or the operation support system instructs a network management virtualization manager to complete, according to the configuration information, network management function virtualization.

When the communications system needs to establish virtualized network management, the network function virtualization orchestrator or the operation support system delivers an instruction to the network management virtualization manager, where the instruction is used to instruct the network management virtualization manager to read configuration information. For example, an instruction that carries a storage address of the configuration information may be sent to the network management virtualization manager, and after receiving the instruction, the network management virtualization manager reads corresponding information from the storage address of the configuration information. Alternatively, an instruction that carries the configuration information may be sent to the network management virtualization manager, and after receiving the instruction, the network management virtualization manager directly reads the configuration information from the instruction.

Optionally, the network function virtualization orchestrator first saves the configuration information as a catalog file (for example, a Catalog file), and then instructs the network management virtualization manager to read the catalog file, so that the network management virtualization manager virtualizes a universal device into network management according to the catalog file. Alternatively, the operation support system first saves the configuration information as a catalog file and then instructs the network management virtualization manager to read the catalog file, so that the network management virtualization manager virtualizes a universal device into network management according to the catalog file.

After reading the catalog file, the network management virtualization manager may virtualize a universal device into network management according to the configuration information in the catalog file.

Optionally, the configuration information of the network management function is used to implement one or a combination of the following functions:
a fault management function, a configuration management function, a accounting management function, a performance management function, a security management function, an enhanced virtualization management function, a virtualization resource and service association function, or a function of adjusting, by virtualized network management, a mapping relationship between a network element and a virtual resource that are managed by the virtualized network management.

Fault management is one of the most basic functions of element management. When a specific network element in a network is faulty and cannot properly provide a service, an element management system locates a fault and corrects the fault in a timely manner. Generally, the fault management includes three aspects: fault detection, isolation, and correction, and therefore the fault management function may include the following functions:
maintaining and checking an error log; receiving an error detection report and making a response; tracing and identifying an error; performing a diagnostic test and correcting the error.

The configuration management function refers to initializing a network element and configuring the network element, to enable the network element to provide a communications network service. A purpose of configuration management is to implement a specific function or to optimize network performance. Therefore, the configuration management function may include the following functions:
managing a managed network element and a name of a managed network element group; initializing or disabling the managed network element; collecting information about the network element according to a requirement; monitoring change information of an important parameter of the network element; and changing a network element configuration.

The accounting management function is used to collect accounting statistics according to usage of a network resource, with a purpose of controlling and monitoring charges and costs of a network operation.

The performance management function is used to manage usage of a system resource, and the function may include: monitoring and analyzing the managed network element and a performance mechanism in which the managed network element provides a service. The performance management function may include: collecting statistical information and maintaining and checking a system status log.

Because a communications network has a relatively high requirement for communication security, there are mainly the following security problems in the communications network: privacy of network data (protecting the network data from being acquired illegally by an intruder); authorization (preventing the intruder from sending incorrect information on the network); and access control (controlling access to a network resource). Correspondingly, network security management may include: managing an authorization mechanism, access control, encryption, and an encryption keyword; maintaining and checking a security log. Certainly, when the configuration information is a network management function, network planning for the virtualized network management, management of a network operating person, and the like may further be set.

Optionally, the configuration information of the topology relationship between the network management function and the another virtualized network entity includes one or a combination of the following configurations:
an interconnection relationship between the virtualized network management and a virtualized network entity, a location relationship setting upon deployment, or a quantity proportion relationship between the virtualized network management and a virtualized network entity.

The virtualized network entity includes one or a combination of the following:
a network element managed by the virtualized network management, a network function virtualization orchestrator, a network function virtualization manager, a virtualized infrastructure manager, or a virtual resource or a virtual machine of a network function.

Optionally, a configuration of the network management related interface includes an interface configuration between the virtualized network management and the virtualized network entity.

The virtualized network entity includes one or a combination of the following:
a virtualized function network element managed by the virtualized network management, a network function virtualization orchestrator, a network function virtualization manager, a virtualized infrastructure manager, or a virtual resource or a virtual machine of a network function.

The interface configuration includes one or a combination of the following configuration information:
an interface name, an interface location, an interface content description, a content format or a transmission sequence for interface transmission, a transmission protocol name or a protocol number or a corresponding standard document number used by an interface, an interface transmission bandwidth requirement, an interface transmission delay requirement, an address binding requirement corresponding to an interface, an address quantity requirement, or an interface security policy setting.

The interface content description may be: information or signaling that needs to be transferred in an interface, which may also be described by using a document number corresponding to a standard interface; the interface format means that an interface transfers interface content in what form, which may specify a specific format protocol such as XML or CORBA, and may specify what content to be first transferred in what form and then specify what content to be later transferred in what form.

After a network management system is actually deployed in a communications network, when the network management system is no longer required by the communications network or needs to be redeployed, an original device needs to be removed. To provide flexible and controllable virtualized network management for the communications system, a configuration of a life cycle of the virtualized network management is further considered in the present invention.

Optionally, the configuration information of the life cycle includes one or a combination of the following configuration information:
life cycle duration of the virtualized network management, a network management activation time point, whether network management can be hibernated and/or a hibernation condition, or time limitation or time point limitation required for completing network management virtualization.

The life cycle refers to a work cycle of the virtualized network management. When the life cycle of the virtualized network management expires, a universal device of the virtualized network management stops the virtualized network management from working and releases a resource allocated to the virtualized network management. The life cycle may be a specific moment, for example, a time of the life cycle of the virtualized network management may be set to a specified time on a specified date of a specified month in a specified year, and when the time arrives, the virtualized network management ends the work cycle and no longer exists. The life cycle may be duration offset starting from a moment at which the virtualized network management is instantiated, for example, the life cycle of the virtualized network management may be set to three-month duration offset, and when the virtualized network management has worked three months since the instantiation, the virtualized network management stops working. The life cycle may be a termination condition, and when the virtualized network management meets the termination condition, the work cycle ends and the virtualized network management no longer exists. For example, the termination condition may be set as follows: when a quantity of network elements managed by the virtualized network management is less than a preset threshold (for example, 1), the virtualized network management stops working.

A difference between so-called existence duration and the life cycle is that when a work time of the virtualized network management reaches the existence duration, the virtualized network management ends the life cycle, but a universal device of the virtualized network management does not release a resource allocated to the virtualized network management. A purpose of setting the existence duration is that when the communications system needs to enable the virtualized network management again, the virtualized network management may be quickly started without requiring redeployment. For a setting of the existence duration, refer to the foregoing setting of the life cycle and details are not described herein.

Certainly, if the communications system requires the virtualized network management to provide a permanent service, the life cycle or the existence duration of the virtualized network management may be set to permanency.

A manner of setting the life cycle or the existence duration of the virtualized network management enables a virtualized network management system to meet an actual requirement of communication network management, so that an existence status of the virtualized network management can be automatically controlled without requiring an on-site operation of an operating person.

To meet an increasingly high requirement of people for communication quality, communication quality of each phase needs to be considered when a communications network is deployed. Based on this, a configuration of the virtualized network management performance requirement may further be set in the present invention, so as to ensure that communication quality of the virtualized network management meets a requirement of an entire communications network.

Optionally, a configuration of the network management performance requirement includes one or a combination of the following configuration information:
shortest response duration of the virtualized network management for an event, a maximum and/or minimum interval for periodic measurement of the virtualized network management, or a quantity upper limit or a related user quantity upper limit of the virtualized network management for processing a network event or a network management task.

When there is only one universal device that can be virtualized in a communications system, the network management virtualization manager deploys virtualized network management on the universal device. When there are multiple communications devices that can be virtualized in the communications system, a configuration of a deployment policy is further considered in the present invention to better utilize communications network resources.

Optionally, a configuration of the deployment policy includes one or a combination of the following policies:
deploying virtualized network management on a universal device of a network element managed by the virtualized network management, deploying virtualized network management on a universal device adjacent to the universal device of the network element managed by the virtualized network management, deploying virtualized network management on a device that has relatively high utilization of a virtual resource, or deploying virtualized network management on a device at a preset geographic location.

It should be noted that, when virtualized network management is implemented, one or more types of the foregoing configuration information may be set according to a specific scenario requirement.

For example, when network management needs to be deployed in a system, configuration information that needs to be set includes at least: configuration information of a network management function and configuration information of a topology relationship between a network management function and another virtualized network entity.

If a work cycle of the virtualized network management needs to be controlled, configuration information of the life cycle further needs to be set. If configuration information of the network management related interface needs to be reconfigured, configuration information of the network management related interface further needs to be set. If in an actual application, there is a specific requirement for network management performance, for example, in a case of an existing processing speed of network management, if the processing speed of the network management needs to be improved, configuration information of a network management performance requirement further needs to be set. If in an actual scenario in which it is difficult to deploy network management, a deployment factor needs to be considered, and in this case configuration information of the deployment policy further needs to be set, so as to meet an actual deployment requirement. The foregoing different configuration information enables the virtualized network management to meet different actual requirements. Therefore, in an actual application, one or more types of configuration information may be set according to a specific network requirement.

It can be learned from the foregoing embodiments that, according to the method for implementing virtualized network management provided in the present invention, a network function virtualization orchestrator or an operation support system first sets configuration information of virtualized network management, and then instructs a network management virtualization manager to complete, according to the configuration information, network management function virtualization, finally implementing virtualized network management. A basis for the virtualized network management is various universal devices and deployment of the virtualized network management is an automated control process, so that no corresponding device needs to be deployed on site by a technical person, and the virtualized network management needs to be implemented only in a universal device in an existing communications network. Therefore, according to the method of the virtualized network management, low-cost and fast network management deployment can be implemented and a deployment requirement of the communications network can be met.

In an actual application, to ensure better controllability and higher flexibility of the virtualized network management, the present invention further provides a preferred solution.

FIG. 2 shows a flowchart of Embodiment 2 of a method for implementing virtualized network management according to an embodiment of the present invention, where the method may include:
Step 201. A network function virtualization orchestrator or an operation support system sets configuration information of virtualized network management, where the configuration information includes at least: configuration information of a network management function, configuration information of a topology relationship between a network management function and another virtualized network entity, configuration information of a network management related interface, configuration information of a life cycle, configuration information of a network management performance requirement, or configuration information of a deployment policy.

Various configuration information in this step is the same as the configuration information in Embodiment 1 of the method, and details are not described herein.

Step 202. The network function virtualization orchestrator or the operation support system instructs a network management virtualization manager to complete, according to the configuration information, network management function virtualization.

The following uses the configuration information of the deployment policy only as an example for explanation and description.

In this embodiment, a purpose of setting the configuration information of the deployment policy is to inform the network management virtualization manager of a specific policy according to which an appropriate universal device is selected and then the virtualized network management is deployed on the selected universal device.

Deploying the virtualized network management in the communications system is intended to manage one or more network elements in the system. Therefore, to manage the network element more conveniently, the virtualized network management may be deployed on a universal device of the network element managed by the virtualized network management, or the virtualized network management is deployed on a universal device adjacent to the universal device of the network element managed by the virtualized network management. For example, if the virtualized network management manages only one network element, and the network element is deployed on a universal server 1, the virtualized network management may be deployed on the universal server 1, or the virtualized network management is deployed on a universal server 2 adjacent to the universal server 1. If the virtualized network management manages multiple network elements, the virtualized network management is deployed on a universal server of any network element.

To ensure reasonable allocation and utilization of communications network resources, usage of virtual resources may be considered when the virtualized network management is deployed. Specifically, utilization of virtual resources of a device that can be virtualized in the communications network is analyzed, and then the virtualized network management is deployed on a universal device with highest resource utilization or second-highest resource utilization, so as to avoid as far as possible deploying the virtualized network management on a universal device whose virtualization resource is not utilized, which can reduce an occurrence probability of a fault and reduce management costs.

Certainly, a geographic location for the virtualized network management may further be preset, that is, the virtualized network management is deployed on a universal device at the set geographic location. Alternatively, a virtual resource group occupied by the virtualized network management may further be preset, so that the virtualized network management is deployed on the universal device according to specific devices that have these virtual resource groups. Alternatively, a network address of a universal device (a physical server) of the virtualized network management may further be preset, and the corresponding universal device is deployed as the virtualized network management according to the network address.

In an actual application, the network function virtualization orchestrator may save the set configuration information as a catalog file, and then instruct the network management virtualization manager to read the catalog file, so that the network management virtualization manager virtualizes a universal device into network management according to the catalog file. After receiving the instruction, the network management virtualization manager reads the catalog file, and then selects an appropriate universal device according to configuration information of a deployment policy in the catalog file, and virtualizes the selected universal device into network management according to other configuration information in the catalog file.

In this preferred solution, before virtualized network management is implemented, related configuration information is set, and configuration information of a network management function, configuration information of a topology relationship between a network management function and another virtualized network entity, configuration information of a network management related interface, configuration information of a life cycle, configuration information of a network management performance requirement, and configuration information of a deployment policy are considered. Configuring the information enables a process of implementing virtualized network management to become a high-controllability virtualization process with relatively good flexibility, and enables the virtualized network management to meet an actual application requirement, so as to ensure reasonable utilization of resources of the communications system.

An embodiment of the present invention further provides a method for implementing virtualized network management, and the method is described from a perspective of a network management virtualization manager.

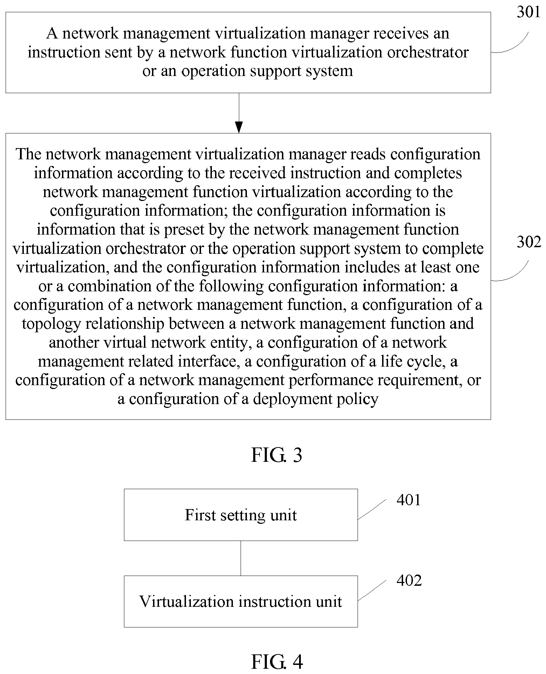

FIG. 3 shows a flowchart of Embodiment 3 of a method for implementing virtualized network management according to an embodiment of the present invention, where the method may include:
Step 301. A network management virtualization manager receives an instruction sent by a network function virtualization orchestrator or an operation support system.
Step 302. The network management virtualization manager reads configuration information according to the received instruction and completes network management function virtualization according to the configuration information; the configuration information is information that is preset by the network management function virtualization orchestrator or the operation support system to complete virtualization, and the configuration information includes at least one or a combination of the following configuration information: a configuration of a network management function, a configuration of a topology relationship between a network management function and another virtualized network entity, a configuration of a network management related interface, a configuration of a life cycle, a configuration of a network management performance requirement, or a configuration of a deployment policy.

An essence that the network management virtualization manager reads configuration information according to the received instruction and completes network management function virtualization according to the configuration information is: the network management virtualization manager virtualizes network management on a universal device (for example, a server, a storage device, and a switching device that are based on an industry standard) and the virtualized network management can take the place of a dedicated network management device in the communications network. Because costs of a universal device are low, using a universal device may reduce investment costs.

Optionally, the reading, by the network management virtualization manager, configuration information according to the received instruction, and completing network management function virtualization according to the configuration information includes:
obtaining, by the network management virtualization manager, the configuration information from the network management function virtualization orchestrator according to the received instruction; and
selecting, by the network management virtualization manager, a universal device according to the configuration information and virtualizing the selected universal device into network management.

When virtualized network management needs to be deployed, the network management virtualization manager first receives an instruction sent by the network management function virtualization orchestrator or the operation support system and obtains corresponding configuration information according to the instruction, and the network management virtualization manager then completes network management virtualization according to the configuration information. By using this method, for network elements of different types, a network management device corresponding to the network elements does not need to be purchased, and low-cost and fast network management deployment may be implemented only by deploying corresponding virtualized network management for the network elements according to this method.

When a network management device in an existing communications network is faulty, the network management device needs to be maintained by a professional technical person in a timely manner to avoid causing a hazard to the communications network. The network management device can properly work only after the maintenance, but a specific hazard is still caused to the communications network during a maintenance period. To resolve this problem, the virtualized network management in this embodiment of the present invention may migrate, when a universal device of the virtualized network management is faulty, the virtualized network management to a normal universal device, so as to ensure normal working of the virtualized network management.

The virtualized network management is generated by virtualizing a universal device, and the virtualized network management is independent of an operating system and a hardware device of the universal device. After the universal device is virtualized, computing resources are all pooled, and when a node in a resource pool is faulty or the universal device encounters another hardware fault, the virtualized network management running on the universal device cannot properly work. Therefore, after the method in this embodiment of the present invention is used to virtualize the universal device into the network management, when discovering that the virtualized network management on the universal device is faulty, the network management virtualization manager may migrate the virtualized network management to a normal universal device in a timely manner, so as to ensure normal working of the virtualized network management.

Corresponding to the method for implementing virtualized network management in the foregoing Embodiment 1, an embodiment of the present invention provides an apparatus for implementing virtualized network management, and the apparatus may also be considered as the network management function virtualization orchestrator or the operation support system in the foregoing Embodiment 1.

FIG. 4 shows is a structural diagram of Embodiment 1 of an apparatus for implementing virtualized network management according to an embodiment of the present invention, where the apparatus may include: a first setting unit 401 and a virtualization instruction unit 402. The following describes a connection relationship between units inside the apparatus with reference to a working principle of the apparatus.

The first setting unit 401 is configured to set configuration information of virtualized network management, where the configuration information includes at least one or a combination of the following configuration information: configuration information of a network management function, configuration information of a topology relationship between a network management function and another virtualized network entity, configuration information of a network management related interface, configuration information of a life cycle, configuration information of a network management performance requirement, or configuration information of a deployment policy.

The virtualization instruction unit 402 is configured to instruct a network management virtualization manager to complete, according to the configuration information, network management function virtualization.

Optionally, if the configuration information is the configuration information of the network management function, the setting unit is specifically configured to set one or a combination of the following functions of the virtualized network management:
a fault management function, a configuration management function, a accounting management function, a performance management function, a security management function, an enhanced virtualization management function, a virtualization resource and service association function, or a function of adjusting, by virtualized network management, a mapping relationship between a network element and a virtual resource that are managed by the virtualized network management.

Optionally, if the configuration information is the configuration information of the topology relationship between the network management function and the another virtualized network entity,
the setting unit is specifically configured to set the topology relationship between the network management function and the another virtualized network entity, where the topology relationship includes one or a combination of the following configurations:
an interconnection relationship between the virtualized network management and a virtualized network entity, a location relationship setting upon deployment, or a quantity proportion relationship between the virtualized network management and a virtualized network entity.

The virtualized network entity includes one or a combination of the following:
a network element managed by the virtualized network management, a network function virtualization orchestrator, a network function virtualization manager, a virtualized infrastructure manager, or a virtual resource or a virtual machine of a network function.

Optionally, if the configuration information is the configuration information of the network management related interface, the setting unit is specifically configured to set an interface configuration between the virtualized network management and the virtualized network entity, where the virtualized network entity includes one or a combination of the following:
a virtualized function network element managed by the virtualized network management, a network function virtualization orchestrator, a network function virtualization manager, a virtualized infrastructure manager, or a virtual resource or a virtual machine of a network function.

The interface configuration includes one or a combination of the following configuration information:
an interface name, an interface location, an interface content description, a content format or a transmission sequence for interface transmission, a transmission protocol name or a protocol number or a corresponding standard document number used by an interface, an interface transmission bandwidth requirement, an interface transmission delay requirement, an address binding requirement corresponding to an interface, an address quantity requirement, or an interface security policy setting.

Optionally, if the configuration information is the configuration information of the life cycle, the setting unit is specifically configured to set one or a combination of the following configuration information of the virtualized network management:
life cycle duration of the virtualized network management, a network management activation time point, whether network management can be hibernated and/or a hibernation condition, or time limitation or time point limitation required for completing network management virtualization.

Optionally, if the configuration information is a configuration of the network management performance requirement, the setting unit is specifically configured to set one or a combination of the following configuration information of the virtualized network management:
shortest response duration of the virtualized network management for an event, a maximum and/or minimum interval for periodic measurement of the virtualized network management, or a quantity upper limit or a related user quantity upper limit of the virtualized network management for processing a network event or a network management task.

Optionally, if the configuration information is a configuration of the deployment policy, the setting unit is specifically configured to set one or a combination of the following policies:
deploying virtualized network management on a universal device of a network element managed by the virtualized network management, deploying virtualized network management on a universal device adjacent to the universal device of the network element managed by the virtualized network management, deploying virtualized network management on a device that has relatively high utilization of a virtual resource, or deploying virtualized network management on a device at a preset geographic location.

When virtualized network management needs to be deployed in a communications network system, the apparatus may be used to first set configuration information of the virtualized network management by using the first setting unit; and then the virtualization instruction unit is used to instruct the network management virtualization manager to perform a virtualization operation. After the apparatus is used, for network elements of different types, a network management system compatible with the network elements does not need to be purchased, and only configuration information of the virtualized network management needs to be set so that the virtualized network management may be adapted to the network element of the corresponding type. In addition, a virtualization manner saves costs of manual deployment. Therefore, the apparatus can implement low-cost and fast network management deployment.

Corresponding to the method for implementing virtualized network management in the foregoing Embodiment 3, an embodiment of the present invention provides an apparatus for implementing virtualized network management, and the apparatus may also be considered as the network management virtualization manager in the foregoing Embodiment 3.

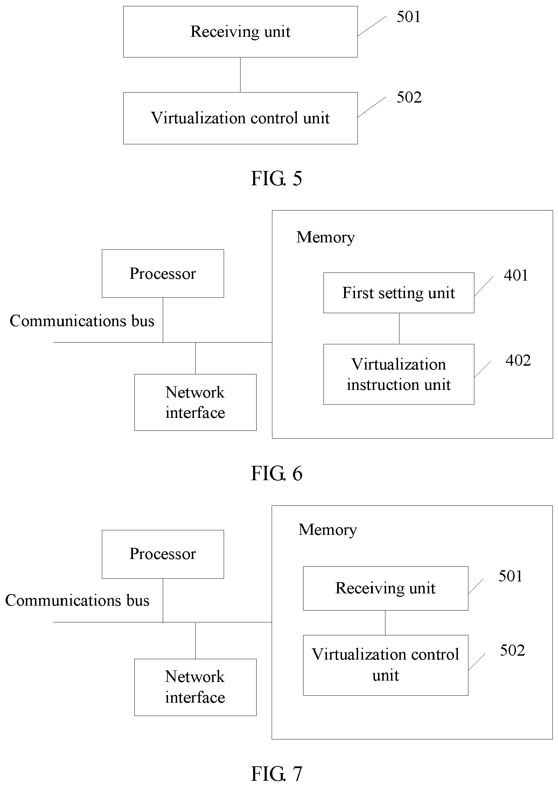

FIG. 5 shows is a structural diagram of Embodiment 3 of an apparatus for implementing virtualized network management according to an embodiment of the present invention, where the apparatus may include: a receiving unit 501 and a virtualization control unit 502. The following describes a connection relationship between units inside the apparatus with reference to a working principle of the apparatus.

The receiving unit 501 is configured to receive an instruction sent by a network function virtualization orchestrator or an operation support system.

The virtualization control unit 502 is configured to read configuration information according to the received instruction and complete network management function virtualization according to the configuration information; the configuration information is information that is preset by the network management function virtualization orchestrator or the operation support system to complete virtualization, and the configuration information includes at least one or a combination of the following configuration information: configuration information of a network management function, configuration information of a topology relationship between a network management function and another virtualized network entity, configuration information of a network management related interface, configuration information of a life cycle, configuration information of a network management performance requirement, or configuration information of a deployment policy.

Optionally, the virtualization control unit includes:
a reading subunit, configured to obtain the configuration information from the network management function virtualization orchestrator or the operation support system according to the received instruction; and
a virtualization subunit, configured to select a universal device according to the configuration information and virtualize the selected universal device into network management.

When virtualized network management needs to be deployed in a communications network system, the apparatus is used for network elements of different types, and a network management system compatible with the network elements does not need to be purchased, only corresponding configuration information needs to be obtained according to the received instruction, and then the universal device is virtualized into the network management according to the configuration information. Therefore, using the apparatus can implement low-cost and fast network management deployment.

Still further, an embodiment of the present invention further provides a hardware constitution of the foregoing apparatus for implementing virtualized network management. The hardware constitution may include at least one processor (for example, CPU), at least one network interface or another communications interface, a memory, and at least one communications bus, which is configured to implement connection and communication between these apparatuses. The processor is configured to execute an executable module, such as a computer program, stored in the memory. The memory may include a high-speed random access memory (RAM: Random Access Memory), and may also include a non-volatile memory (non-volatile memory), such as at least one magnetic disk memory. The at least one network interface (which may be wired or wireless) implements communication connection between the system gateway and at least one other network element over the Internet, a wide area network, a local area network, a metropolitan area network, or the like.

Referring to FIG. 6, in some implementation manners, the memory stores a program instruction, where the program instruction may be executed by the processor, and the program instruction may include a first setting unit 401 and a virtualization instruction unit 402.

Referring to FIG. 7, in some implementation manners, the memory stores a program instruction, where the program instruction may be executed by the processor, and the program instruction may include a receiving unit 501 and a virtualization control unit 502.

Further, an embodiment of the present invention further provides a system for implementing virtualized network management, where the system includes: the apparatus according to Embodiment 1 of the foregoing apparatus and the apparatus according to Embodiment 2 of the foregoing apparatus, where the two apparatuses communicate with each other. That is, the system may include a network function virtualization orchestrator and a network management virtualization manager. Alternatively, the system includes an operation support system and a network management virtualization manager.

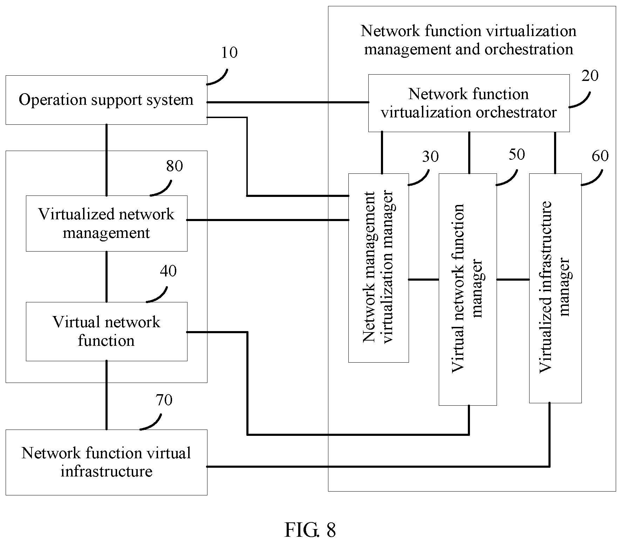

An embodiment of the present invention further provides a system for implementing virtualized network management. FIG. 8 shows a schematic diagram of a system architecture for implementing virtualized network management according to an embodiment of the present invention, where the system may include: an operation support system (Operation Support System, OSS) node 10, an NFVO (Network Function Virtualization Orchestrator, network function virtualization orchestrator) node 20, a V-O&M Manager (Virtual Network management Manager, network management virtualization manager) node 30, a VNF (Virtual Network Function, virtual network function) node 40, a VNFM (Virtual Network Function Manager, virtual network function manager) node 50, a VIM (Virtualized Infrastructure Manager, virtualized infrastructure manager) node 60, a VFVI (Network Function Virtual Infrastructure, network function virtual infrastructure) node 70, and V-O&M (Virtual Network management, virtualized network management) 80.

The operation support system 10 is separately connected to the virtualized network management 80 and the network function virtualization orchestrator 20. The virtualized network management 80 is separately connected to the virtual network function 40 and the virtual network function manager 50. The network management virtualization manager 30 is connected to the network function virtualization orchestrator 20 and the operation support system 10. The virtual network function 40 is separately connected to the network function virtual infrastructure 70 and the virtual network function manager 50. The network function virtualization orchestrator 20 is connected to the virtual network function manager 50. The virtual network function manager 50 is connected to the virtualized infrastructure manager 60. The virtualized infrastructure manager 60 is connected to the network function virtual infrastructure 70.

It should be noted that, the foregoing virtualized network management 80 is generated by virtualizing the operation support system 10 and the network management virtualization manager 30, or generated by virtualizing the network function virtualization orchestrator 20 and the network management virtualization manager 30. Therefore, the virtualized network management may be integrated into a physical entity, or may be integrated into multiple physical entities, that is, a network management function is implemented by using function modules of the multiple physical entities.

It should be noted that, the NFVO node, the VNFM node, and the VIM node are included in the NFV-MANO (Network Function Virtualization Management and Orchestrator, network function virtualization management and orchestrator). A virtualized communications network may include at least one EMS and at least one VNF, where the EMS may virtualize the network management and functions of each VNF may be different. A function of the virtualized network management and a function of the VNF may be integrated into one physical device for implementation, or may be respectively integrated into different physical devices for implementation. An NFVI node in an underlying support architecture includes a computing resource, a storage resource, and a transmission resource.

The foregoing system for implementing virtualized network management may be implemented based on a cloud system, and the cloud system mainly includes cloud computing and cloud storage. The cloud computing refers to distributed computing, and a server cluster is set by using data centers in various places and different applications are provided for a user by using a network. The cloud storage means that user data is stored on a cloud, which avoids using a local resource for storage and achieves a purpose of off-site use and off-site storage.

The OSS is a support system of an operator for integration and information resource sharing, which mainly includes parts such as network management, system management, accounting, business operations, accounting, customer service, and the like. The EMS is a system that manages one or more network elements. The VNF may implement a function, on a cloud system, that is used to implement a physical entity device in the communications network, that is, the VNF is a virtualized network element. For example, the VNF may implement a function of a network element such as a mobility management entity or a base station. The NFVO is used to deploy the VNF, the VNFM is used to manage the VNF, and the VIM is used to manage the NFVI.

Exemplarily, it is assumed that the VNF needs to implement a base station function, the operator may use a base station function that the OSS configures the VNF, and configuration information is transmitted to the VNF by using an interface between the OSS and the EMS and an interface between the EMS and the VNF. Then the VNF is deployed by using the NFVO to implement cell coverage of a virtualized communications network, so that a user can make a call. The VNF may further by managed by using the VNFM, and the VNF may have a function of a mobility management entity.

It may be learned from the foregoing descriptions of the implementation manners that, a person skilled in the art may clearly understand that some or all steps of the methods in the embodiments may be implemented by software in addition to a necessary universal hardware platform. Based on such an understanding, the technical solutions of the present invention essentially or the part contributing to the prior art may be implemented in a format of a software product. The software product may be stored in a storage medium, such as a ROM/RAM, a magnetic disk, or an optical disc, and includes several instructions for instructing a computer device (which may be a personal computer, a server, or a network device such as media gateway) to perform the methods described in the embodiments or some parts of the embodiments of the present invention.

It should be noted that the embodiments in this specification are all described in a progressive manner, for same or similar parts in the embodiments, reference may be made to these embodiments, and each embodiment focuses on a difference from other embodiments. Especially, device and system embodiments are basically similar to a method embodiment, and therefore is described briefly; for related parts, reference may be made to partial descriptions in the method embodiment. The described device and system embodiments are merely exemplary. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. A person of ordinary skill in the art may understand and implement the embodiments of the present invention without creative efforts.

In short, the foregoing descriptions are merely exemplary embodiments of the present invention, but are not intended to limit the protection scope of the present invention. Any modification, equivalent replacement, or improvement made without departing from the spirit and principle of the present invention shall fall within the protection scope of the present invention.

## Claims

1. A method for implementing virtualized network management, wherein the method comprises:
setting (101), by a network function virtualization orchestrator or an operation support system, configuration information of virtualized network management, wherein the configuration information comprises at least one or a combination of the following configuration information:
configuration information of a network management function, configuration information of a topology relationship between a network management function and another virtualized network entity, configuration information of a network management related interface, configuration information of a life cycle, configuration information of a network management performance requirement, or configuration information of a deployment policy; and
instructing (102), by the network function virtualization orchestrator or the operation support system, a network management virtualization manager to complete, according to the configuration information, network management function virtualization;
wherein a configuration of the network management related interface comprises an interface configuration between the virtualized network management and the virtualized network entity, and the virtualized network entity comprises one or a combination of the following:
a virtualized function network element managed by the virtualized network management, a network function virtualization orchestrator, a network function virtualization manager, a virtualized infrastructure manager, or a virtual resource or a virtual machine of a network function; wherein
the interface configuration comprises one or a combination of the following configuration information:
an interface name, an interface location, an interface content description, a content format or a transmission sequence for interface transmission, a transmission protocol name or a protocol number or a corresponding standard document number used by an interface, an interface transmission bandwidth requirement, an interface transmission delay requirement, an address binding requirement corresponding to an interface, an address quantity requirement, or an interface security policy setting.

2. The method according to claim 1, wherein the configuration information of the network management function is used to implement one or a combination of the following functions:
a fault management function, a configuration management function, an accounting management function, a performance management function, a security management function, an enhanced virtualization management function, a virtualization resource and service association function, or a function of adjusting, by virtualized network management, a mapping relationship between a network element and a virtual resource that are managed by the virtualized network management.

3. The method according to claim 1 or 2, wherein the configuration information of the topology relationship between the network management function and the another virtualized network entity comprises one or a combination of the following configurations:
an interconnection relationship between the virtualized network management and a virtualized network entity, a location relationship setting upon deployment, or a quantity proportion relationship between the virtualized network management and a virtualized network entity; wherein
the virtualized network entity comprises one or a combination of the following:
a network element managed by the virtualized network management, a network function virtualization orchestrator, a network function virtualization manager, a virtualized infrastructure manager, or a virtual resource or a virtual machine of a network function.

4. The method according to any one of claims 1 to 3, wherein the configuration information of the life cycle comprises one or a combination of the following configuration information:
life cycle duration of the virtualized network management, a network management activation time point, whether network management can be hibernated and/or a hibernation condition, or time limitation or time point limitation required for completing network management virtualization.

5. The method according to any one of claims 1 to 4, wherein a configuration of the network management performance requirement comprises one or a combination of the following configuration information:
shortest response duration of the virtualized network management for an event, a maximum and/or minimum interval for periodic measurement of the virtualized network management, or a quantity upper limit or a related user quantity upper limit of the virtualized network management for processing a network event or a network management task.

6. An apparatus for implementing virtualized network management, wherein the apparatus comprises:
a first setting unit (401), configured to set configuration information of virtualized network management, wherein the configuration information comprises at least one or a combination of the following configuration information: configuration information of a network management function, configuration information of a topology relationship between a network management function and another virtualized network entity, configuration information of a network management related interface, configuration information of a life cycle, configuration information of a network management performance requirement, or configuration information of a deployment policy; and
a virtualization instruction unit (402), configured to instruct a network management virtualization manager to complete, according to the configuration information, network management function virtualization;
wherein if the configuration information is the configuration information of the network management related interface, the first setting unit (401) is specifically configured to set an interface configuration between the virtualized network management and the virtualized network entity, wherein the virtualized network entity comprises one or a combination of the following:
a virtualized function network element managed by the virtualized network management, a network function virtualization orchestrator, a network function virtualization manager, a virtualized infrastructure manager, or a virtual resource or a virtual machine of a network function; wherein
the interface configuration comprises one or a combination of the following configuration information:
an interface name, an interface location, an interface content description, a content format or a transmission sequence for interface transmission, a transmission protocol name or a protocol number or a corresponding standard document number used by an interface, an interface transmission bandwidth requirement, an interface transmission delay requirement, an address binding requirement corresponding to an interface, an address quantity requirement, or an interface security policy setting.

7. The apparatus according to claim 6, wherein if the configuration information is the configuration information of the network management function, the first setting unit (401) is specifically configured to set one or a combination of the following functions of the virtualized network management:
a fault management function, a configuration management function, an accounting management function, a performance management function, a security management function, an enhanced virtualization management function, a virtualization resource and service association function, or a function of adjusting, by virtualized network management, a mapping relationship between a network element and a virtual resource that are managed by the virtualized network management.

8. The apparatus according to claim 6 or 7, wherein if the configuration information is the configuration information of the topology relationship between the network management function and the another virtualized network entity,
the first setting unit (401) is specifically configured to set the topology relationship between the network management function and the another virtualized network entity, wherein the topology relationship comprises one or a combination of the following configurations:
an interconnection relationship between the virtualized network management and a virtualized network entity, a location relationship setting upon deployment, or a quantity proportion relationship between the virtualized network management and a virtualized network entity; wherein
the virtualized network entity comprises one or a combination of the following:
a network element managed by the virtualized network management, a network function virtualization orchestrator, a network function virtualization manager, a virtualized infrastructure manager, or a virtual resource or a virtual machine of a network function.

9. The apparatus according to any one of claims 6 to 8, wherein if the configuration information is the configuration information of the life cycle, the first setting unit (401) is specifically configured to set one or a combination of the following configuration information of the virtualized network management:
life cycle duration of the virtualized network management, a network management activation time point, whether network management can be hibernated and/or a hibernation condition, or time limitation or time point limitation required for completing network management virtualization.

10. The apparatus according to any one of claims 6 to 9, wherein if the configuration information is a configuration of the network management performance requirement, the first setting unit (401) is specifically configured to set one or a combination of the following configuration information of the virtualized network management:
shortest response duration of the virtualized network management for an event, a maximum and/or minimum interval for periodic measurement of the virtualized network management, or a quantity upper limit or a related user quantity upper limit of the virtualized network management for processing a network event or a network management task.

11. An apparatus for implementing virtualized network management, wherein the apparatus comprises:
a receiving unit (501), configured to receive an instruction sent by a network function virtualization orchestrator or an operation support system; and
a virtualization control unit (502), configured to read configuration information according to the received instruction and complete network management function virtualization according to the configuration information; wherein the configuration information is information that is preset by the network management function virtualization orchestrator or the operation support system to complete virtualization, and the configuration information comprises at least one or a combination of the following configuration information: configuration information of a network management function, configuration information of a topology relationship between a network management function and another virtualized network entity, configuration information of a network management related interface, configuration information of a life cycle, configuration information of a network management performance requirement, or configuration information of a deployment policy;
wherein a configuration of the network management related interface comprises an interface configuration between the virtualized network management function and the virtualized network entity, and the virtualized network entity comprises one or a combination of the following:
a virtualized function network element managed by the virtualized network management function, a network function virtualization orchestrator, a network function virtualization manager, a virtualized infrastructure manager, or a virtual resource or a virtual machine of a network function; wherein
the interface configuration comprises one or a combination of the following configuration information:
an interface name, an interface location, an interface content description, a content format or a transmission sequence for interface transmission, a transmission protocol name or a protocol number or a corresponding standard document number used by an interface, an interface transmission bandwidth requirement, an interface transmission delay requirement, an address binding requirement corresponding to an interface, an address quantity requirement, or an interface security policy setting.

12. The apparatus according to claim 11, wherein the virtualization control unit (502) comprises:
a reading subunit, configured to obtain the configuration information from the network management function virtualization orchestrator or the operation support system according to the received instruction; and
a virtualization subunit, configured to select a universal device according to the configuration information and virtualize the selected universal device into network management.

13. A system for implementing virtualized network management, wherein the system comprises:
the apparatus according to any one of claims 6 to 10 and the apparatus according to claim 11 or 12, wherein the two apparatuses communicate with each other.

## Patentansprüche

1. Verfahren zum Implementieren einer virtualisierten Netzwerkverwaltung, wobei das Verfahren umfasst:
Festlegen (101), durch eine Koordinationseinheit zur Netzwerkfunktionsvirtualisierung oder ein Betriebsunterstützungssystem, von Konfigurationsinformationen einer virtualisierten Netzwerkverwaltung, wobei die Konfigurationsinformationen mindestens eine oder eine Kombination der folgenden Konfigurationsinformationen umfasst:
Konfigurationsinformationen einer Netzwerkverwaltungsfunktion, Konfigurationsinformationen einer Topologiebeziehung zwischen einer Netzwerkverwaltungsfunktion und einer anderen virtualisierten Netzwerkentität, Konfigurationsinformationen einer mit Netzwerkverwaltung verbundenen Schnittstelle, Konfigurationsinformationen eines Lebenszyklus, Konfigurationsinformationen einer Netzwerkverwaltungsleistungsanforderung oder Konfigurationsinformationen einer Bereitstellungsrichtlinie; und
Anweisen (102), durch die Koordinationseinheit zur Netzwerkfunktionsvirtualisierung oder das Betriebsunterstützungssystem, einer Virtualisierungsverwaltung zur Netzwerkverwaltung, eine Netzwerkverwaltungsfunktionsvirtualisierung in Übereinstimmung mit den Konfigurationsinformationen abzuschließen;
wobei eine Konfiguration der mit der Netzwerkverwaltung verbundenen Schnittstelle eine Konfiguration einer Schnittstelle zwischen der virtualisierten Netzwerkverwaltung und der virtualisierten Netzwerkentität umfasst und die virtualisierte Netzwerkentität eine oder eine Kombination von Folgendem umfasst:
ein virtualisiertes Funktionsnetzwerkelement, das von der virtualisierten Netzwerkverwaltung verwaltet wird, eine Koordinationseinheit zur Netzwerkfunktionsvirtualisierung, eine Netzwerkfunktionsvirtualisierungsverwaltung, eine virtualisierte Infrastrukturverwaltung oder eine virtuelle Ressource oder eine virtuelle Maschine einer Netzwerkfunktion; wobei
die Konfiguration der Schnittstelle eine oder eine Kombination der folgenden Konfigurationsinformationen umfasst:
einen Schnittstellennamen, eine Schnittstellenposition, eine Schnittstelleninhaltsbeschreibung, ein Inhaltsformat oder eine Übertragungssequenz zur Schnittstellenübertragung, einen Übertragungsprotokollnamen oder eine Protokollnummer oder eine entsprechende, von einer Schnittstelle verwendete Standarddokumentnummer, eine Schnittstellenübertragungsbandbreitenanforderung, eine Schnittstellenübertragungsverzögerungsanforderung, eine Adressbindungsanforderung, die einer Schnittstelle entspricht, eine Adressmengenanforderung oder eine Schnittstellensicherheitsrichtlinieneinstellung.

2. Verfahren nach Anspruch 1, wobei die Konfigurationsinformationen der Netzwerkverwaltungsfunktion verwendet werden, um eine oder eine Kombination der folgenden Funktionen zu implementieren:
eine Fehlerverwaltungsfunktion, eine Konfigurationsverwaltungsfunktion, eine Buchhaltungsverwaltungsfunktion, eine Leistungsverwaltungsfunktion, eine Sicherheitsverwaltungsfunktion, eine verbesserte Virtualisierungsverwaltungsfunktion, eine Virtualisierungsressourcen- und Dienstzuordnungsfunktion oder eine Funktion zum Anpassen einer Abbildungsbeziehung zwischen einem Netzwerkelement und einer virtuellen Ressource, die von der virtualisierten Netzwerkverwaltung verwaltet werden, durch eine virtualisierte Netzwerkverwaltung.

3. Verfahren nach Anspruch 1 oder 2, wobei die Konfigurationsinformationen der Topologiebeziehung zwischen der Netzwerkverwaltungsfunktion und der anderen virtualisierten Netzwerkentität eine oder eine Kombination der folgenden Konfigurationen umfassen:
eine Verbindungsbeziehung zwischen der virtualisierten Netzwerkverwaltung und einer virtualisierten Netzwerkentität, einer Positionsbeziehungseinstellung nach Bereitstellung oder eine Mengenproportionsbeziehung zwischen der virtualisierten Netzwerkverwaltung und einer virtualisierten Netzwerkentität; wobei die virtualisierte Netzwerkentität eine oder eine Kombination von Folgendem umfasst:
ein Netzwerkelement, das von der virtualisierten Netzwerkverwaltung verwaltet wird, eine Koordinationseinheit zur Netzwerkfunktionsvirtualisierung, eine Netzwerkfunktionsvirtualisierungsverwaltung, eine virtualisierte Infrastrukturverwaltung oder eine virtuelle Ressource oder eine virtuelle Maschine einer Netzwerkfunktion.

4. Verfahren nach einem der Ansprüche 1 bis 3, wobei die Konfigurationsinformationen des Lebenszyklus eine oder eine Kombination der folgenden Konfigurationsinformationen umfassen:
Lebenszyklusdauer der virtualisierten Netzwerkverwaltung, einen Zeitpunkt der Netzwerkverwaltungsaktivierung, ob die Netzwerkverwaltung in den Ruhestatus und/oder einen Ruhezustand gesetzt werden kann oder eine zeitliche Begrenzung oder Zeitpunktbegrenzung zum Abschließen der N etzwerkverwaltungsvirtualisierung.

5. Verfahren nach einem der Ansprüche 1 bis 4, wobei eine Konfiguration der Netzwerkverwaltungsleistungsanforderung eine oder eine Kombination der folgenden Konfigurationsinformationen umfasst:
kürzeste Reaktionsdauer der virtualisierten Netzwerkverwaltung für ein Ereignis, ein Maximal- und/oder Minimalintervall für eine periodische Messung der virtualisierten Netzwerkverwaltung oder eine Mengenobergrenze oder eine zugehörige Benutzermengenobergrenze der virtualisierten Netzwerkverwaltung zum Verarbeiten eines Netzwerkereignisses oder einer Netzwerkverwaltungsaufgabe.

6. Vorrichtung zum Implementieren einer virtualisierten Netzwerkverwaltung, wobei die Vorrichtung umfasst:
eine erste Festlegungseinheit (401), die ausgelegt ist, Konfigurationsinformationen einer virtualisierten Netzwerkverwaltung festzulegen, wobei die Konfigurationsinformationen mindestens eine oder eine Kombination der folgenden Konfigurationsinformationen umfasst: Konfigurationsinformationen einer Netzwerkverwaltungsfunktion, Konfigurationsinformationen einer Topologiebeziehung zwischen einer Netzwerkverwaltungsfunktion und einer anderen virtualisierten Netzwerkentität, Konfigurationsinformationen einer mit Netzwerkverwaltung verbundenen Schnittstelle, Konfigurationsinformationen eines Lebenszyklus, Konfigurationsinformationen einer Netzwerkverwaltungsleistungsanforderung oder Konfigurationsinformationen einer Bereitstellungsrichtlinie; und
eine Virtualisierungsanweisungseinheit (402), die ausgelegt ist, eine Virtualisierungsverwaltung zur Netzwerkverwaltung anzuweisen, eine Netzwerkverwaltungsfunktionsvirtualisierung in Übereinstimmung mit den Konfigurationsinformationen abzuschließen;
wobei, falls die Konfigurationsinformationen die Konfigurationsinformationen der mit der Netzwerkverwaltung verbundenen Schnittstelle sind, die erste Festlegungseinheit (401) insbesondere ausgelegt ist, eine Konfiguration einer Schnittstelle zwischen der virtualisierten Netzwerkverwaltung und der virtualisierten Netzwerkentität festzulegen, wobei die virtualisierte Netzwerkentität eine oder eine Kombination von Folgendem umfasst:
ein virtualisiertes Funktionsnetzwerkelement, das von der virtualisierten Netzwerkverwaltung verwaltet wird, eine Koordinationseinheit zur Netzwerkfunktionsvirtualisierung, eine Netzwerkfunktionsvirtualisierungsverwaltung, eine virtualisierte Infrastrukturverwaltung oder eine virtuelle Ressource oder eine virtuelle Maschine einer Netzwerkfunktion; wobei
die Konfiguration der Schnittstelle eine oder eine Kombination der folgenden Konfigurationsinformationen umfasst:
einen Schnittstellennamen, eine Schnittstellenposition, eine Schnittstelleninhaltsbeschreibung, ein Inhaltsformat oder eine Übertragungssequenz zur Schnittstellenübertragung, einen Übertragungsprotokollnamen oder eine Protokollnummer oder eine entsprechende, von einer Schnittstelle verwendete Standarddokumentnummer, eine Schnittstellenübertragungsbandbreitenanforderung, eine Schnittstellenübertragungsverzögerungsanforderung, eine Adressbindungsanforderung, die einer Schnittstelle entspricht, eine Adressmengenanforderung oder eine Schnittstellensicherheitsrichtlinieneinstellung.

7. Vorrichtung nach Anspruch 6, wobei, falls die Konfigurationsinformationen die Konfigurationsinformationen der Netzwerkverwaltungsfunktion sind, die erste Festlegungseinheit (401) insbesondere ausgelegt ist, eine oder eine Kombination der folgenden Funktionen der virtualisierten Netzwerkverwaltung festzulegen:
eine Fehlerverwaltungsfunktion, eine Konfigurationsverwaltungsfunktion, eine Buchhaltungsverwaltungsfunktion, eine Leistungsverwaltungsfunktion, eine Sicherheitsverwaltungsfunktion, eine verbesserte Virtualisierungsverwaltungsfunktion, eine Virtualisierungsressourcen- und Dienstzuordnungsfunktion oder eine Funktion zum Anpassen einer Abbildungsbeziehung zwischen einem Netzwerkelement und einer virtuellen Ressource, die von der virtualisierten Netzwerkverwaltung verwaltet werden, durch eine virtualisierte Netzwerkverwaltung.

8. Vorrichtung nach Anspruch 6 oder 7, wobei, falls die Konfigurationsinformationen die Konfigurationsinformationen der Topologiebeziehung zwischen der Netzwerkverwaltungsfunktion und der anderen virtualisierten Netzwerkentität sind, die erste Festlegungseinheit (401) insbesondere ausgelegt ist, die Topologiebeziehung zwischen der Netzwerkverwaltungsfunktion und der anderen virtualisierten Netzwerkentität festzulegen, wobei die Topologiebeziehung eine oder eine Kombination der folgenden Konfigurationen umfasst:
eine Verbindungsbeziehung zwischen der virtualisierten Netzwerkverwaltung und einer virtualisierten Netzwerkentität, einer Positionsbeziehungseinstellung nach Bereitstellung oder eine Mengenproportionsbeziehung zwischen der virtualisierten Netzwerkverwaltung und einer virtualisierten Netzwerkentität; wobei die virtualisierte Netzwerkentität eine oder eine Kombination von Folgendem umfasst:
ein Netzwerkelement, das von der virtualisierten Netzwerkverwaltung verwaltet wird, eine Koordinationseinheit zur Netzwerkfunktionsvirtualisierung, eine Netzwerkfunktionsvirtualisierungsverwaltung, eine virtualisierte Infrastrukturverwaltung oder eine virtuelle Ressource oder eine virtuelle Maschine einer Netzwerkfunktion.

9. Vorrichtung nach einem der Ansprüche 6 bis 8, wobei, falls die Konfigurationsinformationen die Konfigurationsinformationen des Lebenszyklus sind, die erste Festlegungseinheit (401) insbesondere ausgelegt ist, eine oder eine Kombination der folgenden Konfigurationsinformationen der virtualisierten Netzwerkverwaltung festzulegen:
Lebenszyklusdauer der virtualisierten Netzwerkverwaltung, einen Zeitpunkt der Netzwerkverwaltungsaktivierung, ob die Netzwerkverwaltung in den Ruhestatus und/oder einen Ruhezustand gesetzt werden kann oder eine zeitliche Begrenzung oder Zeitpunktbegrenzung zum Abschließen der N etzwerkverwaltungsvirtualisierung.

10. Vorrichtung nach einem der Ansprüche 6 bis 9, wobei, falls die Konfigurationsinformationen eine Konfiguration der Netzwerkverwaltungsleistungsanforderung sind, die erste Festlegungseinheit (401) insbesondere ausgelegt ist, eine oder eine Kombination der folgenden Konfigurationsinformationen der virtualisierten Netzwerkverwaltung festzulegen:
kürzeste Reaktionsdauer der virtualisierten Netzwerkverwaltung für ein Ereignis, ein Maximal- und/oder Minimalintervall für eine periodische Messung der virtualisierten Netzwerkverwaltung oder eine Mengenobergrenze oder eine zugehörige Benutzermengenobergrenze der virtualisierten Netzwerkverwaltung zum Verarbeiten eines Netzwerkereignisses oder einer Netzwerkverwaltungsaufgabe.

11. Vorrichtung zum Implementieren einer virtualisierten Netzwerkverwaltung, wobei die Vorrichtung umfasst:
eine Empfangseinheit (501), die ausgelegt ist, eine von einer Koordinationseinheit zur Netzwerkfunktionsvirtualisierung oder einem Betriebsunterstützungssystem gesendete Anweisung zu empfangen; und
eine Virtualisierungssteuereinheit (502), die ausgelegt ist, Konfigurationsinformationen in Übereinstimmung mit der empfangenen Anweisung zu lesen und eine Netzwerkverwaltungsfunktionsvirtualisierung in Übereinstimmung mit den Konfigurationsinformationen abzuschließen; wobei die Konfigurationsinformationen von der Koordinationseinheit zur Netzwerkfunktionsvirtualisierung oder dem Betriebsunterstützungssystem vorab festgelegte Informationen sind und die Konfigurationsinformationen mindestens eine oder eine Kombination der folgenden Konfigurationsinformationen umfasst: Konfigurationsinformationen einer Netzwerkverwaltungsfunktion, Konfigurationsinformationen einer Topologiebeziehung zwischen einer Netzwerkverwaltungsfunktion und einer anderen virtualisierten Netzwerkentität, Konfigurationsinformationen einer mit Netzwerkverwaltung verbundenen Schnittstelle, Konfigurationsinformationen eines Lebenszyklus, Konfigurationsinformationen einer Netzwerkverwaltungsleistungsanforderung oder Konfigurationsinformationen einer Bereitstellungsrichtlinie;
wobei eine Konfiguration der mit der Netzwerkverwaltung verbundenen Schnittstelle eine Konfiguration einer Schnittstelle zwischen der virtualisierten Netzwerkverwaltungsfunktion und der virtualisierten Netzwerkentität umfasst und die virtualisierte Netzwerkentität eine oder eine Kombination von Folgendem umfasst:
ein virtualisiertes Funktionsnetzwerkelement, das von der virtualisierten Netzwerkverwaltungsfunktion verwaltet wird, eine Koordinationseinheit zur Netzwerkfunktionsvirtualisierung, eine Netzwerkfunktionsvirtualisierungsverwaltung, eine virtualisierte Infrastrukturverwaltung oder eine virtuelle Ressource oder eine virtuelle Maschine einer Netzwerkfunktion; wobei
die Konfiguration der Schnittstelle eine oder eine Kombination der folgenden Konfigurationsinformationen umfasst:
einen Schnittstellennamen, eine Schnittstellenposition, eine Schnittstelleninhaltsbeschreibung, ein Inhaltsformat oder eine Übertragungssequenz zur Schnittstellenübertragung, einen Übertragungsprotokollnamen oder eine Protokollnummer oder eine entsprechende, von einer Schnittstelle verwendete Standarddokumentnummer, eine Schnittstellenübertragungsbandbreitenanforderung, eine Schnittstellenübertragungsverzögerungsanforderung, eine Adressbindungsanforderung, die einer Schnittstelle entspricht, eine Adressmengenanforderung oder eine Schnittstellensicherheitsrichtlinieneinstellung.

12. Vorrichtung nach Anspruch 11, wobei die Virtualisierungssteuereinheit (502) umfasst:
eine Leseuntereinheit, die ausgelegt ist, die Konfigurationsinformationen von der Koordinationseinheit zur Netzwerkfunktionsvirtualisierung oder dem Betriebsunterstützungssystem in Übereinstimmung mit der empfangenen Anweisung zu beziehen; und
eine Virtualisierungsuntereinheit, die ausgelegt ist, in Übereinstimmung mit den Konfigurationsinformationen eine Universaleinrichtung auszuwählen und die ausgewählte Universaleinrichtung in eine Netzwerkverwaltung zu virtualisieren.

13. System zum Implementieren einer virtualisierten Netzwerkverwaltung, wobei das System umfasst:
Vorrichtung nach einem der Ansprüche 6 bis 10 und die Vorrichtung nach Anspruch 11 oder 12, wobei die zwei Vorrichtungen miteinander kommunizieren.

## Revendications

1. Procédé de mise en oeuvre d'une gestion de réseau virtualisée, dans lequel le procédé consiste à :
établir (101), par un orchestrateur de virtualisation de fonctions de réseau ou un système de support de fonctionnement, des informations de configuration d'une gestion de réseau virtualisée, dans lequel les informations de configuration comprennent au moins une ou une combinaison parmi les informations de configuration suivantes :
des informations de configuration d'une fonction de gestion de réseau, des informations de configuration d'un rapport de topologie entre une fonction de gestion de réseau et une autre entité de réseau virtualisée, des informations de configuration d'une interface liée à la gestion de réseau, des informations de configuration d'un cycle de vie, des informations de configuration d'une exigence de performance de gestion de réseau ou des informations de configuration d'une règle de déploiement ; et
donner instruction (102), par l'orchestrateur de virtualisation d'une fonction de réseau ou le système de support de fonctionnement, à un gestionnaire de virtualisation de gestion de réseau d'achever, en fonction des informations de configuration, une virtualisation de fonctions de gestion de réseau ;
dans lequel une configuration de la gestion de réseau liée à une interface comprend une configuration d'interface entre la gestion de réseau virtualisée et l'entité de réseau virtualisée, et l'entité de réseau virtualisée comprend un élément ou une combinaison de ce qui suit :
un élément de réseau de fonction virtualisée géré par la gestion de réseau virtualisée, un orchestrateur de virtualisation de fonctions de réseau, un gestionnaire de virtualisation de fonctions de réseau, un gestionnaire d'infrastructure virtualisée, une ressource virtuelle ou une machine virtuelle d'une fonction de réseau ; dans lequel la configuration d'interface comprend une ou une combinaison parmi les informations de configuration suivantes :
un nom d'interface, une localisation d'interface, une description de contenu d'interface, un format de contenu ou une séquence de transmission pour une transmission d'interface, un nom de protocole de transmission, un numéro de protocole ou un numéro de document standard correspondant utilisé par une interface, une exigence de largeur de bande de transmission d'une interface, une exigence de délai de transmission d'une interface, une exigence de liaison d'adresses correspondant à une interface, une exigence de quantité d'adresses ou un établissement de règles de sécurité d'une interface.

2. Procédé selon la revendication 1, dans lequel les informations de configuration de la fonction de gestion de réseau sont utilisées pour mettre en oeuvre une fonction ou une combinaison des fonctions suivantes :
une fonction de gestion par défaut, une fonction de gestion de configuration, une fonction de gestion de compte, une fonction de gestion de performance, une fonction de gestion de sécurité, une fonction de gestion de virtualisation améliorée, une ressource de virtualisation et une fonction d'association de service, ou une fonction de réglage, grâce à la gestion de réseau virtualisée, d'un rapport de mappage entre un élément de réseau et une ressource virtuelle qui sont gérés par la gestion de réseau virtualisée.

3. Procédé selon la revendication 1 ou 2, dans lequel les informations de configuration du rapport de topologie entre la fonction de gestion de réseau et l'autre entité de réseau virtualisée comprennent une configuration ou une combinaison des configurations suivantes :
un rapport d'interconnexion entre la gestion de réseau virtualisée et une entité de réseau virtualisée, un établissement de rapport de localisation lors du déploiement, ou un rapport de proportion de quantité entre la gestion de réseau virtualisée et une entité de réseau virtualisée ; dans lequel
l'entité de réseau virtualisée comprend un élément ou une combinaison de ce qui suit :
un élément de réseau géré par la gestion de réseau virtualisée, un orchestrateur de virtualisation de fonctions de réseau, un gestionnaire de virtualisation de fonctions de réseau, un gestionnaire d'infrastructure virtualisée, une ressource virtuelle ou une machine virtuelle d'une fonction de réseau.

4. Procédé selon l'une quelconque des revendications 1 à 3, dans lequel les informations de configuration du cycle de vie comprennent une ou une combinaison parmi les informations de configuration suivantes :
une durée de cycle de vie de la gestion de réseau virtualisée, un point temporel d'activation de gestion de réseau, si la gestion de réseau peut être en hibernation et/ou en condition d'hibernation, une limite temporelle ou une limite de point temporel requise pour achever une virtualisation de gestion de réseau.

5. Procédé selon l'une quelconque des revendications 1 à 4, dans lequel une configuration de l'exigence de performance de gestion de réseau comprend une ou une combinaison parmi les informations de configuration suivantes :
une durée de réponse la plus courte de la gestion de réseau virtualisée pour un événement, un intervalle maximum et/ou minimum pour une mesure périodique de la gestion de réseau virtualisée, une limite supérieure de quantité ou une limite supérieure de quantité liée à l'utilisateur de la gestion de réseau virtualisée pour traiter un événement de réseau ou une tâche de gestion de réseau.

6. Appareil de mise en oeuvre d'une gestion de réseau virtualisée, dans lequel l'appareil comprend :
une première unité d'établissement (401), configurée pour établir des informations de configuration d'une gestion de réseau virtualisée, dans lequel les informations de configuration comprennent au moins une ou une combinaison parmi les informations de configuration suivantes : des informations de configuration d'une fonction de gestion de réseau, des informations de configuration d'un rapport de topologie entre une fonction de gestion de réseau et une autre entité de réseau virtualisée, des informations de configuration d'une interface liée à la gestion de réseau, des informations de configuration d'un cycle de vie, des informations de configuration d'une exigence de performance de gestion de réseau ou des informations de configuration d'une règle de déploiement ; et
une unité d'instruction de virtualisation (402), configurée pour donner instruction à un gestionnaire de virtualisation de gestion de réseau d'achever, en fonction des informations de configuration, une virtualisation de fonctions de gestion de réseau ;
dans lequel si les informations de configuration sont les informations de configuration de l'interface liée à la gestion de réseau, la première unité d'établissement (401) est configurée spécifiquement pour établir une configuration d'interface entre la gestion de réseau virtualisée et l'entité de réseau virtualisée, et l'entité de réseau virtualisée comprend un élément ou une combinaison de ce qui suit :
un élément de réseau de fonction virtualisée géré par la gestion de réseau virtualisée, un orchestrateur de virtualisation de fonctions de réseau, un gestionnaire de virtualisation de fonctions de réseau, un gestionnaire d'infrastructure virtualisée, une ressource virtuelle ou une machine virtuelle d'une fonction de réseau ; dans lequel la configuration d'interface comprend une ou une combinaison parmi les informations de configuration suivantes :
un nom d'interface, une localisation d'interface, une description de contenu d'interface, un format de contenu ou une séquence de transmission pour une transmission d'interface, un nom de protocole de transmission, un numéro de protocole ou un numéro de document standard correspondant utilisé par une interface, une exigence de largeur de bande de transmission d'interface, une exigence de délai de transmission d'une interface, une exigence de liaison d'adresse correspondant à une interface, une exigence de quantité d'adresses ou un établissement de règles de sécurité d'une interface.

7. Appareil selon la revendication 6, dans lequel si les informations de configuration sont les informations de configuration de la fonction de gestion de réseau, la première unité d'établissement (401) est configurée spécifiquement pour établir une fonction ou une combinaison des fonctions suivantes de la gestion de réseau virtualisée :
une fonction de gestion par défaut, une fonction de gestion de configuration, une fonction de gestion de compte, une fonction de gestion de performance, une fonction de gestion de sécurité, une fonction de gestion de virtualisation améliorée, une fonction d'association de services et de ressources de virtualisation, ou une fonction d'établissement, par la gestion de réseau virtualisée, d'un rapport de mappage entre un élément de réseau et une ressource virtuelle qui sont gérés par la gestion de réseau virtualisée.

8. Appareil selon la revendication 6 ou 7, dans lequel si les informations de configuration sont les informations de configuration du rapport de topologie entre la fonction de gestion de réseau et l'autre entité de réseau virtualisée,
la première unité d'établissement (401) est spécifiquement configurée pour établir le rapport de topologie entre la fonction de gestion de réseau et l'autre entité de réseau virtualisée, dans lequel le rapport de topologie comprend un élément ou une combinaison des configurations suivantes :
un rapport d'interconnexion entre la gestion de réseau virtualisée et une entité de réseau virtualisée, un établissement de rapport de localisation lors du déploiement, ou un rapport de proportion de quantité entre une gestion de réseau virtualisée et une entité de réseau virtualisée ; dans lequel
l'entité de réseau virtualisée comprend un élément ou une combinaison de ce qui suit :
un élément de réseau géré par la gestion de réseau virtualisée, un orchestrateur de virtualisation de fonctions de réseau, un gestionnaire de virtualisation de fonctions de réseau, un gestionnaire d'infrastructure virtualisée, une ressource virtuelle ou une machine virtuelle d'une fonction de réseau.

9. Appareil selon l'une quelconque des revendications 6 à 8, dans lequel si les informations de configuration sont les informations de configuration du cycle de vie, la première unité d'établissement (401) est configurée spécifiquement pour établir une ou une combinaison parmi les informations de configuration suivantes de la gestion de réseau virtualisée :
une durée de cycle de vie de la gestion de réseau virtualisée, un point temporel d'activation de gestion de réseau, si la gestion de réseau peut être en hibernation et/ou en condition d'hibernation, une limite temporelle ou une limite de point temporel requise pour achever une virtualisation de gestion de réseau.

10. Appareil selon l'une quelconque des revendications 6 à 9, dans lequel si les informations de configuration sont une configuration de l'exigence de performance de gestion de réseau, la première unité d'établissement (401) est configurée spécifiquement pour établir une ou une combinaison parmi les informations de configuration suivantes de la gestion de réseau virtualisée :
une durée de réponse la plus courte de la gestion de réseau virtualisée pour un événement, un intervalle maximum et/ou minimum pour une mesure périodique de la gestion de réseau virtualisée, une limite supérieure de quantité ou une limite supérieure de quantité liée à l'utilisateur de la gestion de réseau virtualisée pour traiter un événement de réseau ou une tâche de gestion de réseau.

11. Appareil de mise en oeuvre d'une gestion de réseau virtualisée, dans lequel l'appareil comprend :
une unité de réception (501), configurée pour recevoir une instruction envoyée par un orchestrateur de virtualisation de fonctions de réseau ou un système de support de fonctionnement ; et
une unité de commande de virtualisation (502), configurée pour lire les informations de configuration en fonction de l'instruction reçue et achever la virtualisation de fonctions de gestion de réseau en fonction des informations de configuration ; dans lequel les informations de configuration sont des informations qui sont prédéfinies par l'orchestrateur de virtualisation de fonctions de gestion de réseau ou le système de support de fonctionnement pour achever la virtualisation, et les informations de configuration comprennent au moins une ou une combinaison parmi les informations de configuration suivantes : des informations de configuration d'une fonction de gestion de réseau, des informations de configuration d'un rapport de topologie entre une fonction de gestion de réseau et une autre entité de réseau virtualisée, des informations de configuration d'une interface liée à la gestion de réseau, des informations de configuration d'un cycle de vie, des informations de configuration d'une exigence de performance de gestion de réseau ou des informations de configuration d'une règle de déploiement ;
dans lequel une configuration de l'interface liée à la gestion de réseau comprend une configuration d'interface entre la fonction de gestion de réseau virtualisée et l'entité de réseau virtualisée, et l'entité de réseau virtualisée comprend un élément ou une combinaison de ce qui suit :
un élément de réseau de fonction virtualisée géré par la fonction de gestion de réseau virtualisée, un orchestrateur de virtualisation de fonctions de réseau, un gestionnaire de virtualisation de fonctions de réseau, un gestionnaire d'infrastructure virtualisée, une ressource virtuelle ou une machine virtuelle d'une fonction de réseau ; dans lequel
la configuration d'interface comprend une ou une combinaison parmi les informations de configuration suivantes :
un nom d'interface, une localisation d'interface, une description de contenu d'interface, un format de contenu ou une séquence de transmission pour une transmission d'interface, un nom de protocole de transmission, un numéro de protocole ou un numéro de document standard correspondant utilisé par une interface, une exigence de largeur de bande de transmission d'interface, une exigence de délai de transmission d'une interface, une exigence de liaisons d'adresses correspondant à une interface, une exigence de quantité d'adresses ou un établissement de règles de sécurité d'une interface.

12. Appareil selon la revendication 11, dans lequel l'unité de commande de virtualisation (502) comprend :
une sous-unité de lecture, configurée pour obtenir les informations de configuration à partir de l'orchestrateur de virtualisation de fonctions de gestion de réseau ou du système de support de fonctionnement en fonction de l'instruction reçue ; et
une sous-unité de virtualisation, configurée pour sélectionner un dispositif universel en fonction des informations de configuration et virtualiser le dispositif universel sélectionné dans la gestion de réseau.

13. Système de mise en oeuvre d'une gestion de réseau virtualisée, dans lequel le système comprend :
l'appareil selon l'une quelconque des revendications 6 à 10 et l'appareil selon la revendication 11 ou 12, dans lequel les deux appareils communiquent l'un avec l'autre.
